# EUROPEAN PATENT APPLICATION

(11) **EP 2 852 040 A1**
(43) Date of publication of application: **25.03.2015**
(21) Application number: 13275224.7
(22) Date of filing: 20.09.2013
(51) Int. Cl.: H02M 1/32, H02J 3/36, H02M 7/483

(54) **Module**

(71) Applicant: ALSTOM Technology Ltd, 5400 Baden (CH)
(72) Inventor: Whitehouse, Robert Stephen, Walton on the Hill Stafford ST17 0JU (GB)
(74) Representative: Marshall, Caroline

(57) **Abstract**

There is provided a module (48) for use in a voltage source converter. The module (48) comprises:
a sub-module including first and second switching blocks (54,56) connected in parallel with a primary energy storage device (58) in a half-bridge arrangement, each switching block (54,56) including a primary switching element (60);
a secondary switching element (62) connected to or within the sub-module; and
a primary control unit (68) configured to control switching of the primary switching elements (60) so as to configure the primary switching elements (60) and primary energy storage device (58) to form a forced commutation circuit to turn off the secondary switching element (62) and thereby limit a current flowing through the module (48) or block a current from flowing through the module (48).

## Description

The invention relates to a module and an electrical assembly.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC electrical networks operating at different frequencies.

In any such power transmission network, converters are required at each interface between AC and DC power to effect the required conversion, and one such form of converter is a voltage source converter (VSC).

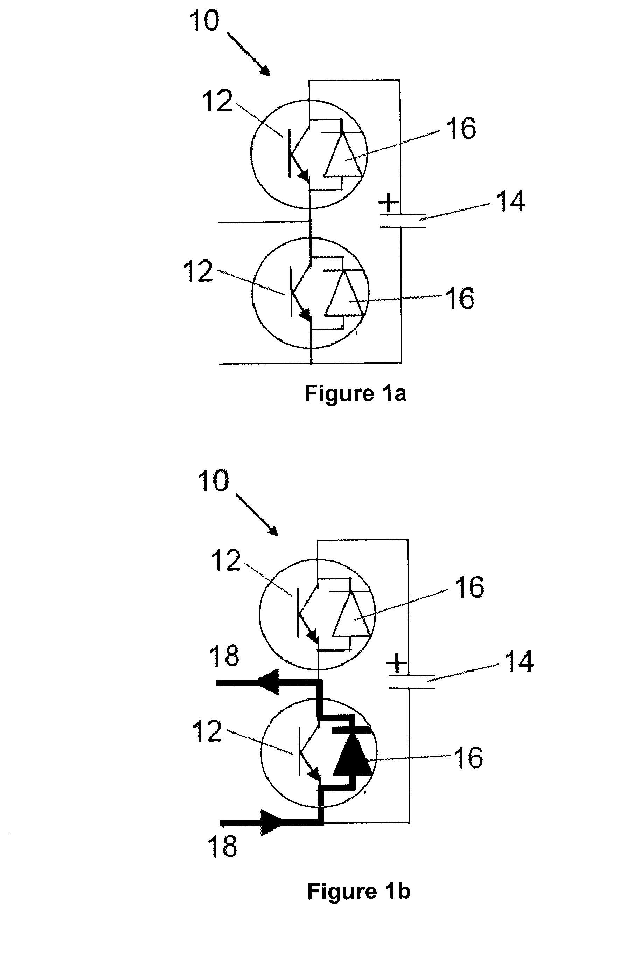

It is known to use a voltage source converter with a multilevel converter arrangement, wherein the known voltage source converter interconnects AC and DC electrical networks. The multilevel converter arrangement includes respective converter bridges of converter cells 10 connected in series. As shown in Figure 1 a, each converter cell 10 includes a pair of insulated gate bipolar transistors (IGBT) 12 connected in parallel with a capacitor 14 in a half-bridge arrangement, each IGBT 12 being connected in anti-parallel with a diode 16.

The known voltage source converter is however vulnerable to DC side faults or other abnormal operating conditions that can present a short circuit with low impedance across the DC terminals of the known voltage source converter. Such faults can occur due to damage or breakdown of insulation, lightning strikes, movement of conductors or other accidental bridging between conductors by a foreign object.

The presence of low impedance across the DC terminals of the known voltage source converter can be detrimental to the known voltage source converter because it results in an uncontrolled fault current flowing from the AC electrical network, through the fault and back to the AC electrical network. The configuration of each converter cell 10 means that each converter cell 10 is incapable of blocking the flow of the fault current 18, as shown in Figure 1 b. This results in the development of a high fault current exceeding the current rating of the known voltage source converter. Such a high fault current not only damages components of the known voltage source converter, but also results in the known voltage source converter being offline for a period of time. This results in increased cost of repair and maintenance of damaged converter hardware, and inconvenience to end users relying on the working of the known voltage source converter. It is therefore important to be able to reduce or block the uncontrolled fault current as soon as it is detected.

It is known to use a circuit breaker to disconnect a voltage source converter from either or both of the AC and DC electrical networks to prevent the uncontrolled fault current from flowing through the voltage source converter. However, conventional AC circuit breakers have slow response times and thereby are incapable of interrupting the fault current before it rises beyond unacceptable limits, while conventional high-speed DC circuit breakers have insufficient current and voltage ratings to be used in power transmission networks. In addition, after the original fault has been removed, it takes a considerable amount of time to reclose the circuit breaker, thus adding a further delay before normal operation of the voltage source converter can be resumed.

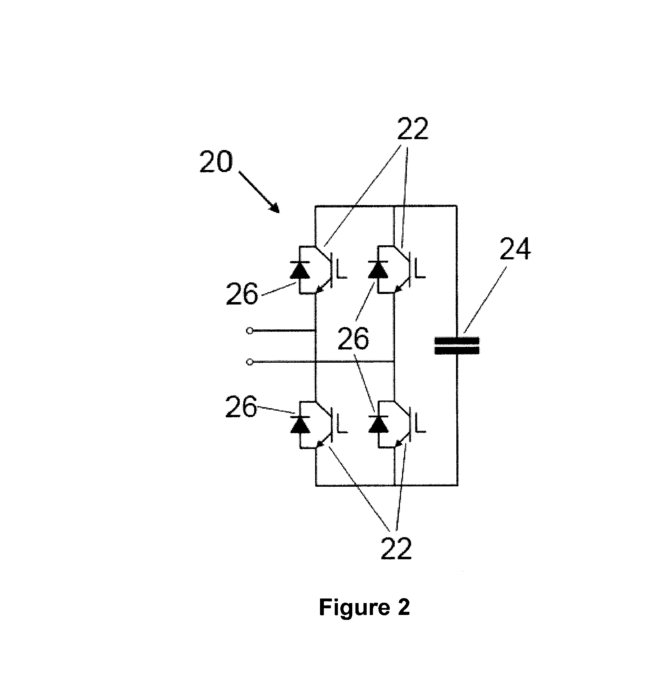

It is also known to use a full-bridge converter cell 20 in place of each converter cell 10 in Figure 1 a. Figure 2 shows, in schematic form, the structure of the full-bridge converter cell 20. The full-bridge converter cell 20 includes two pairs of IGBTs 22 connected in parallel with a capacitor 24 in a full-bridge arrangement, each IGBT 22 being connected in anti-parallel with a diode 26. The configuration of the full-bridge converter cell 20 enables the use of its capacitor 24 to provide an opposing voltage to oppose the flow of the uncontrolled fault current. However, the full-bridge converter cell 20 has twice as many IGBTs 22 as each converter cell 10 of Figure 1 a, thus adding to the size, weight, cost and conduction losses of the voltage source converter.

According to a first aspect of the invention, there is provided a module for connection to an electrical network, the module comprising:
a sub-module including first and second switching blocks connected in parallel with a primary energy storage device in a half-bridge arrangement, each switching block including a primary switching element;
a secondary switching element connected to or within the sub-module; and
a primary control unit configured to control switching of the primary switching elements so as to configure the primary switching elements and primary energy storage device to form a forced commutation circuit to turn off the secondary switching element and thereby limit a current flowing through the module or block a current from flowing through the module.

During normal operation of the module, the secondary switching element is turned on to permit current to flow freely through the module. This enables the module to selectively provide a voltage source through switching of the primary switching elements to switch the energy storage device into and out of circuit with the connected electrical network. The provision of such a voltage source may, for example, facilitate modification of a network voltage presented by the AC electrical network.

A fault or other abnormal operating condition in the electrical network may lead to a high fault current flowing into the module.

In the event of the fault current flowing into the module, the primary control unit controls switching of the primary switching elements (i.e. turn on or off each primary switching element) so as to configure the primary switching elements and primary energy storage device to form the forced commutation circuit to turn off the secondary switching element. More particularly, formation of the forced commutation circuit results in application of a reverse biasing voltage across the secondary switching element to reduce a current flowing through the secondary switching element to zero, thereby enabling turn-off of the secondary switching element. This in turn limits the fault current flowing through the module or blocks the fault current from flowing through the module.

The inclusion of the secondary switching element and primary control unit in the module according to the invention therefore enables the module to reliably limit or block a fault current. In contrast, omission of the secondary switching element and primary control unit from the module results in the problems mentioned above in relation to the conventional converter cell 10 shown in Figure 1 a.

The configuration of the module according to the invention is advantageous in that the secondary switching element of the module is much smaller than a circuit breaker and in that the module requires less switching elements than the conventional full-bridge converter cell 20 shown in Figure 1b to carry out its functions of selectively providing a voltage source and limiting or blocking a fault current, thus providing comparative reductions in terms of size, weight, cost and conduction losses.

The configuration of the module according to the invention therefore results in an economical, space-saving module that is capable of not only selectively provide a voltage source during normal operation of the module, but also limiting or blocking a fault current resulting from a fault in the associated electrical network. Moreover the configuration of the module according to the invention is such that the secondary switching element and primary control unit can be added to the converter cell 10 of Figure 1a to provide the converter cell 10 with a fault current limiting or blocking capability without the need for significant modification of the structure and switching control scheme of the converter cell 10.

The inclusion of the secondary switching element and primary control unit in the module according to the invention permits use of a forced commutated switching element as the secondary switching element. Optionally the forced commutated switching element may be selected to provide the secondary switching element with a higher voltage rating than the primary switching elements, thus improving the ability of the module to limit or block a fault current. Further optionally the forced commutated switching element may be selected to reduce conduction losses in the secondary switching element when it is turned on during normal operation of the module.

In embodiments of the invention, the primary control unit may be configured to control switching of the primary switching elements to enable formation of a voltage across the primary energy storage device following formation of the forced commutation circuit and turn-off of the secondary switching element, so as to reduce a voltage stress across each of the first and second switching blocks. For example, following formation of the forced commutation circuit and turn-off of the secondary switching element, the primary switching elements may be switched such that the flow of fault current into the primary energy storage device causes a reversal of a voltage across the primary energy storage device that in turn reduces the voltage stress across each of the first and second switching blocks. Preferably the primary energy storage device is rated such that the voltage formed across the primary energy storage device minimises a voltage stress across each of the first and second switching blocks.

In such embodiments, the secondary switching element may be arranged in the module such that the magnitude of the voltage formed across the primary energy storage device is determined by the voltage rating of the secondary switching element. Thus, use of a secondary switching element with a high voltage rating, especially one that exceeds the voltage rating of each primary switching element, further enhances the use of the voltage formed across the primary energy storage device to reduce the voltage stress across each of the first and second switching blocks.

In embodiments of the invention, the secondary switching element may be or may include, but is not limited to, an electronic switching element, such as a thyristor, a junction field effect transistor, a gate turn-off thyristor, or a wide bandgap force commutated switching device.

In further embodiments of the invention, the secondary switching element may be or may include a bidirectional switching element that can conduct current in two directions. For example, the secondary switching element may be or may include a pair of anti-parallel connected active switching elements (e.g. a pair of anti-parallel connected thyristors) or an active switching element (e.g. a thyristor) connected in anti-parallel with a passive current check element (e.g. a diode).

Each switching block may include a primary switching element connected in anti-parallel with a passive current check element. Configuration of each switching block in this manner protects the primary switching element from a reverse voltage. In addition, the inclusion of the secondary switching element and primary control unit in the module according to the invention allows the fault current to be blocked from flowing through the passive current check element.

The configuration of the or each module may vary to facilitate the operation of the or each module to selectively provide a voltage source. For example, the first and second switching blocks may be connected in parallel with the primary energy storage device in a half-bridge arrangement to define a 2-quadrant unipolar sub-module that can provide zero or positive voltage and can conduct current in two directions.

The configuration of the module according to the invention may vary in order to enable formation of a forced commutation circuit to turn off the secondary switching element and thereby limit a current flowing through the module or block a current from flowing through the module.

In embodiments of the invention, the sub-module may include first and second sub-module terminals. The first switching block may be connected in parallel with a series connection of the second switching block and primary energy storage device between the first and second sub-module terminals. The first switching block may include the secondary switching element connected in series with its primary switching element.

In such embodiments, the primary control unit may be configured to turn off the primary switching element of the second switching block in response to a reversal of a voltage across the primary energy storage device following formation of the forced commutation circuit and turn-off of the secondary switching element. This allows the primary energy storage device to provide a voltage offset that protects the primary switching element of the second switching block from the full voltage appearing across the module.

In other embodiments of the invention, the module may include first and second sets of current flow control elements connected in parallel with the second switching block in a full-bridge arrangement. The first set of current flow control elements may include a series connection of the first switching block and the primary energy storage device. The second set of current flow control elements may include a series connection of the secondary switching element and a tertiary switching element. The primary control unit may be configured to control switching of the primary and tertiary switching elements so as to configure the primary and tertiary switching elements and primary energy storage device to form a forced commutation circuit to turn off the secondary switching element and thereby limit a current flowing through the module or block a current from flowing through the module.

In such embodiments, the primary control unit may be configured to turn off the tertiary switching element in response to a reversal of a voltage across the primary energy storage device following formation of the forced commutation circuit and turn-off of the secondary switching element. This allows the primary energy storage device to provide a voltage offset that protects the tertiary switching element from the full voltage appearing across the module.

In further embodiments of the invention, the first switching block may include a primary switching element connected in anti-parallel with a passive current check element. The passive current check element of the first switching block may be configured to limit a magnitude and/or duration of a recovery current in the secondary switching element following turn-off of the secondary switching element. This thereby prevents the recovery current in the secondary switching element from damaging the other switching elements of the module.

In still further embodiments of the invention, the module may further include:
a secondary control unit configured to selectively turn on the secondary switching element; and
a secondary energy storage device configured to selectively provide a driving voltage to drive the secondary control unit, the secondary energy storage device being arranged to permit current to flow therethrough to store energy when the secondary switching element is turned off to limit a current flowing through the module or block a current from flowing through the module.

The arrangement of the secondary energy storage device in this manner means that the secondary energy storage device can be energised by a current flowing from the electrical network without having to turn on the secondary switching element. This is useful when the primary energy storage device is initially uncharged at the start of a start-up sequence of the module and associated electrical network in which a current from the associated electrical network flows into the module. Therefore, the secondary energy storage device can be used as a power supply unit to drive the secondary control unit to enable turn-on of the secondary switching element. Without the secondary energy storage device in the module, it would be necessary to add an additional power supply unit to the module or power the secondary control unit from ground level, both of which could add considerable size, weight and cost to the module.

In embodiments employing the use of a secondary energy storage device, the module may include a snubber circuit connected in parallel with the secondary switching element, wherein the snubber circuit includes the secondary energy storage device. In this manner the secondary energy storage device may be used both as a power supply unit and as a voltage snubber.

The module may further include a secondary control unit configured to selectively turn on the secondary switching element at a predefined time period following start-up of the electrical network so as to limit an inrush current flowing from the electrical network into the module to below a predefined current threshold. This protects the primary switching elements and primary energy storage device from being damaged by a potentially high inrush current, thereby obviating the need for additional "soft start" equipment (e.g. a suitably rated resistor) and associated control hardware to limit the inrush current. According to a second aspect of the invention, there is provided an electrical assembly comprising a plurality of modules, each module including at least one switching element and at least one energy storage device, the or each switching element and the or each energy storage device in each module combining to selectively provide a voltage source, wherein at least one module is in accordance with any embodiment of the first aspect of the invention.

The number of modules in the electrical assembly may vary depending on the voltage and current requirements of the electrical assembly. For example, the electrical assembly may include a plurality of series-connected modules.

The provision of the plurality of modules in the electrical assembly makes it possible to build up a combined voltage across the plurality of modules, which is higher than the voltage available from each of the individual modules via the insertion of the energy storage devices of multiple modules, each providing its own voltage. In this manner switching of the switching elements in each module causes the plurality of modules to provide a stepped variable voltage source, which permits the generation of a voltage waveform across the plurality of modules using a step-wise approximation. As such the plurality of modules is capable of providing a wide range of complex voltage waveforms.

The inclusion of at least one module according to the first aspect of the invention in the electrical assembly results in an economical, space-saving electrical assembly that is capable of not only selectively provide a voltage source during normal operation of the electrical assembly, but also limiting or blocking a fault current in response to a fault in an associated electrical network.

In such embodiments, the electrical assembly may include a plurality of series-connected modules. The plurality of series-connected modules may include first and second end modules. Each of the first and second end modules may be in accordance with any embodiment of the first aspect of the invention. At least one other module may be connected between the first and second end modules. The electrical assembly may further includes a current path connected between the secondary switching elements of the first and second end modules. The current path bypasses the or each other module connected between the first and second end modules. The current path includes at least one switching element.

The provision of the current path in the electrical assembly prevents the fault current from flowing through the or each other module connected between the first and second modules, whilst permitting the first and second modules to limit or block the fault current. This obviates the need to provide the or each other module with a voltage blocking capability, thus simplifying the design and construction of the electrical assembly.

The current path may include a plurality of series-connected switching elements. The plurality of series-connected switching elements may include:
a plurality of series-connected passive semiconductor devices (e.g. diodes);
a plurality of series-connected active semiconductor devices (e.g. thyristors); and/or
at least one active semiconductor device (e.g. thyristor) connected in series with at least one passive semiconductor device (e.g. diode).

It will be appreciated that the module and electrical assembly according to the invention may be applied to various types of electrical circuits, e.g. a voltage source converter.

Preferred embodiments of the invention will now be described, by way of non-limiting examples only, with reference to the accompanying drawings in which:
Figure 1 a shows, in schematic form, a prior art converter cell;
Figure 1 b illustrates, in schematic form, the flow of a fault current in the prior art converter cell of Figure 1 a;
Figure 2 shows, in schematic form, a prior art full-bridge converter cell;
Figure 3 shows, in schematic form, a voltage source converter;
Figure 4 shows, in schematic form, a module according to a first embodiment of the invention;
Figure 5 shows, in schematic form, the flow of a fault current in the voltage source converter of Figure 3;
Figure 6 illustrates, in graph form, a simulated operation of the module of Figure 4 during the flow of the fault current shown in Figure 5;
Figure 7 shows, in schematic form, a module according to a second embodiment of the invention; and
Figure 8 shows, in schematic form, an electrical assembly according to a third embodiment of the invention.

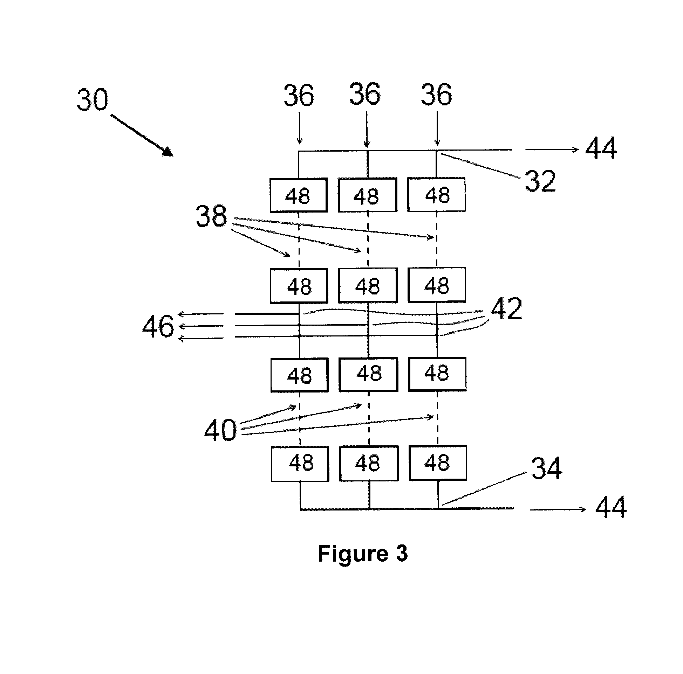

A voltage source converter 30 is shown in Figure 3. The voltage source converter 30 includes first and second DC terminals 32,34 and three converter limbs 36. Each converter limb 36 extends between the first and second DC terminals 32,34 and has first and second limb portions 38,40 separated by an AC terminal 42. In particular, in each converter limb 36, the first limb portion 38 is connected between the first DC terminal 32 and the AC terminal 42, and the second limb portion 40 is connected between the second DC terminal 34 and the AC terminal 42.

In use, the first and second DC terminals 32,34 of the voltage source converter 30 are respectively connected to first and second terminals of a DC electrical network 44, the first terminal carrying a positive DC voltage and the second terminal carrying a negative DC voltage, while the AC terminal 42 of each converter limb 36 is connected to a respective phase of a three-phase AC electrical network 46.

Each limb portion 38,40 includes a plurality of series-connected first modules 48.

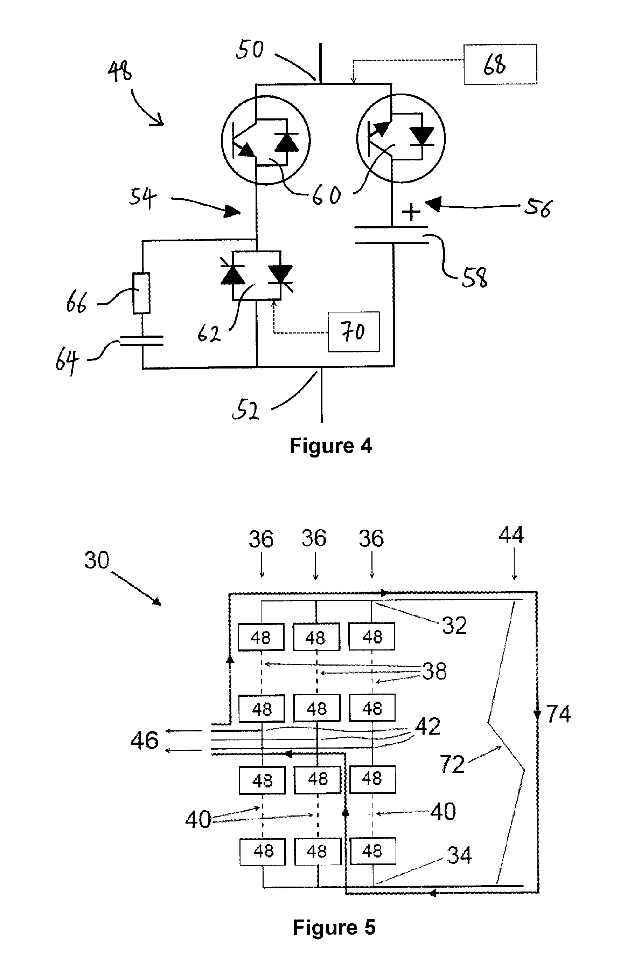

A first module 48 according to a first embodiment of the invention is shown in Figure 4.

Each first module 48 includes a sub-module with first and second sub-module terminals 50,52. Each sub-module includes first and second switching blocks 54,56 connected in parallel with a primary energy storage device (which is in the form of a primary capacitor 58) in a half-bridge arrangement. In this manner the first switching block 54 is connected in parallel with a series connection of the second switching block 56 and primary capacitor 58 between the first and second sub-module terminals 50,52.

Each switching block 54,56 includes a primary switching element 60 connected in anti-parallel with a passive current check element.

Each primary switching element 60 includes a single active switching device. Each active switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of active switching devices in each primary switching element 60 may vary depending on the required voltage and current ratings of that primary switching element 60.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

The first switching block 54 further includes a secondary switching element 62 connected in series with its primary switching element 60. The secondary switching element 62 is in the form of a pair of anti-parallel connected thyristors. In other embodiments, it is envisaged that, instead of being in the form of a pair of anti-parallel connected thyristors, the secondary switching element may be or may include:
- a pair of anti-parallel connected active switching elements, whereby each active switching element may be a junction field effect transistor, a gate turn-off thyristor, a wide bandgap force commutated switching device or any other forced commutated switching device;
- an active switching element connected in anti-parallel with a passive current check element; or
- any other bidirectional switching element that can conduct current in two directions.

The first module 48 further includes a snubber circuit connected in parallel with the secondary switching element 62. The snubber circuit is in the form of a series connection of a secondary energy storage device (which is in the form of a secondary capacitor 64) and a resistor 66. This allows the secondary capacitor 64 to act as a voltage snubber for the secondary switching element 62.

It will be appreciated that the snubber circuit is an optional component of the first module 48.

It is envisaged that, in other embodiments of the invention, each capacitor may be replaced by another type of energy storage device that is capable of storing and releasing energy, e.g. a fuel cell or battery.

In each limb portion 38,40, the plurality of series-connected first modules 48 defines a chain-link converter, and the operation of each first module 48 in each chain-link converter is described as follows.

The primary capacitor 58 of the first module 48 is selectively bypassed or inserted into the chain-link converter by changing the states of the IGBTs of the first and second switching blocks 54,56. This selectively directs current through the primary capacitor 58 or causes current to bypass the primary capacitor 58, so that the first module 48 provides a zero or positive voltage.

The primary capacitor 58 of the first module 48 is bypassed when the IGBTs of the first and second switching blocks 54,56 in the first module 48 are configured so that the first switching block 54 forms a short circuit in the first module 48 that bypasses the primary capacitor 58. This causes current in the chain-link converter to pass through the short circuit and bypass the primary capacitor 58, and so the first module 48 provides a zero voltage, i.e. the first module 48 is configured in a bypassed mode.

The primary capacitor 58 of the first module 48 is inserted into the chain-link converter when the IGBTs of the first and second switching blocks 54,56 in the first module 48 are configured to allow the current in the chain-link converter to flow into and out of the primary capacitor 58. The primary capacitor 58 then charges or discharges its stored energy so as to provide a non-zero voltage, i.e. the first module 48 is configured in a non-bypassed mode.

In this manner the first and second switching blocks 54,56 are connected in parallel with the primary capacitor 58 in a half-bridge arrangement to define a 2-quadrant unipolar module 48 that can provide zero or positive voltage and can conduct current in two directions, and so each first module 48 is capable of selectively providing a voltage source.

It is possible to build up a combined voltage across the chain-link converter, which is higher than the voltage available from each of its individual first modules 48 via the insertion of the primary capacitors 58 of multiple first module 48, each providing its own voltage, into the chain-link converter. In this manner switching of the IGBTs in each first module 48 causes the chain-link converter to provide a stepped variable voltage source, which permits the generation of a voltage waveform across the chain-link converter using a step-wise approximation. As such the chain-link converter is capable of providing a wide range of complex voltage waveforms.

Each first module 48 further includes primary and secondary control units 68,70.

The primary control unit 68 is configured to control switching of the primary switching elements 60 (i.e. turn on or off the primary switching elements 60).

The secondary control unit 70 is configured to selectively turn on the secondary switching element 62. The secondary capacitor 64 is configured to selectively provide a driving voltage to drive the secondary control unit 70.

In use, during normal operation of the AC and DC electrical networks 46,44, each of the first modules 48 of the first and second limb portions 38,40 are controllable to control the configuration of an AC voltage at each AC terminal 42 to facilitate voltage conversion between the AC and DC electrical networks 46,44, while the secondary control unit 70 of each first module 48 turns on the secondary switching element 62 to permit current to flow freely through that first module 48. Since the secondary switching element 62 of each first module 48 remains turned on during normal operation of the AC and DC electrical networks 46,44, any losses associated with the respective snubber circuit is comparatively negligible.

A fault 72 or other abnormal operating condition in the DC electrical network 44 may lead to a high fault current 74 flowing from the AC electrical network 46 into the voltage source converter 30, as shown in Figure 5.

For the purposes of this specification, the operation of the voltage source converter 30 during a flow of fault current 74 from the AC electrical network 46 into the voltage source converter 30 is described with reference to one of its first modules 48. It will be appreciated that the described operation of one of the first modules 48 of the voltage source converter 30 applies mutatis mutandis to the operation of at least one other first module 48.

In the event of the fault current 74 flowing from the AC electrical network 46 into the voltage source converter 30, the primary control unit 68 turns off the primary switching element 60 of the first switching block 54 and turns on the primary switching element 60 of the second switching block 56. Such switching of the primary switching elements 60 configures the primary switching elements 60 and primary capacitor 58 to form a forced commutation circuit that applies a reverse biasing voltage across the first switching block 54, thus applying a reverse biasing voltage across the secondary switching element 62, to reduce a current flowing through the secondary switching element 62 to zero, thereby enabling turn-off of the secondary switching element 62.

The turn-off of the secondary switching element 62 is accompanied by a short, but substantial, reverse recovery current in the secondary switching element 62. The reverse charge recovery characteristics of the passive current check element of the first switching block 54 is preferably configured to limit a magnitude and/or duration of the recovery current in the secondary switching element 62 following turn-off of the secondary switching element 62. This thereby prevents the recovery current in the secondary switching element 62 from damaging the other switching elements 60 of the first module 48.

Following formation of the forced commutation circuit and turn-off of the secondary switching element 62, the flow of fault current 74 into the primary capacitor causes a reversal of a voltage across the primary capacitor 58. In response to the reversal of the voltage across the primary capacitor 58, the primary control unit 68 turns off the primary switching element 60 of the second switching block 56. This allows the primary capacitor 58 to provide a voltage offset that protects the primary switching element 60 of the second switching block 56 from the full voltage appearing across the first module 48.

The formation of a reverse voltage across the primary capacitor 58 in turn reduces a voltage stress across each of the first and second switching blocks 54,56. Preferably the primary capacitor 58 is rated such that the voltage formed across the primary capacitor 58 minimises a voltage stress across each of the first and second switching blocks 54,56.

The arrangement of the secondary switching element 62 in the first module 48 is such that the magnitude of the reverse voltage formed across the primary capacitor 58 is determined by the voltage rating of the secondary switching element 62. Thus, use of a secondary switching element 62 with a high voltage rating, especially one that exceeds the voltage rating of each primary switching element 60, further enhances the use of the voltage formed across the primary capacitor 58 to reduce the voltage stress across each of the first and second switching blocks 54,56.

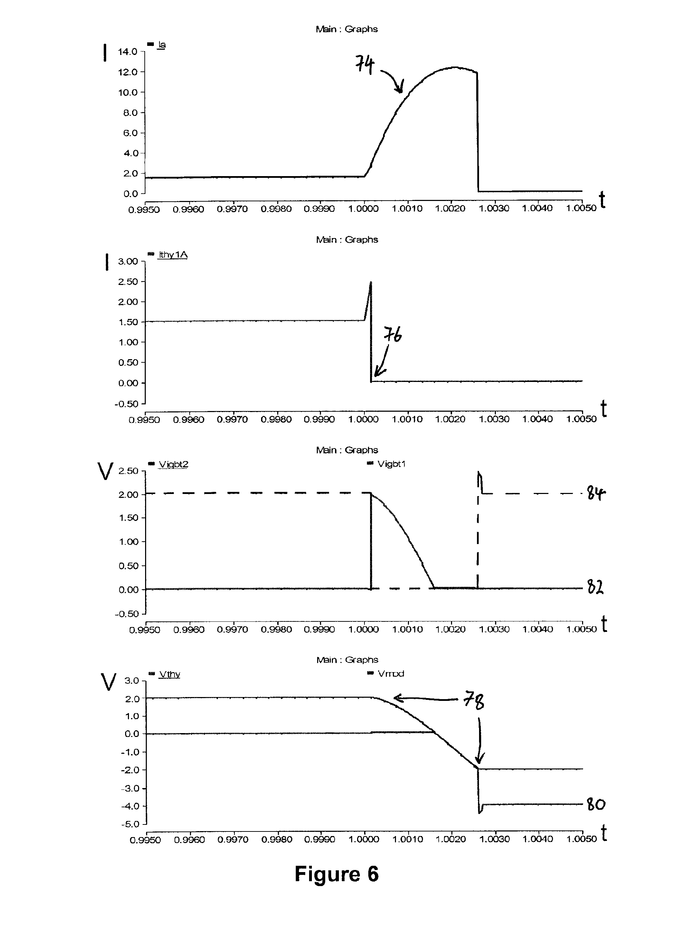

Figure 6 illustrates, in graph form, a simulated operation of a first module 48 during the flow of the fault current 74 flowing from the AC electrical network 46 into the voltage source converter 30.

In the simulated operation, the first module 48 has a nominal rating of 2 kV, and a driving emf of 4 kV is applied to the first module 48. The voltage of the primary capacitor 58 is set to 2 kV by a power supply that is disconnected at t = 0.99 s. A normal operating current of 1.5 kA is passed through the first module 48 until a short-circuit occurs at t = 1 s, at which point in time a fault current 74 begins to flow through the first module 48. The rate of rise of the fault current 74 is limited to approximately 6 A per µs. The breakover protection levels of each IGBT and the secondary switching element 62 are respectively set at 4.5kV and 8kV.

It can be seen from Figure 6 that, following commencement of the fault 72:
- the time taken to turn off 76 the secondary switching element 62 is less than 0.5 µs;
- the primary capacitor 58 experiences a reversal 78 of voltage from 2 kV to - 2kV;
- the final voltage withstand capability of the first module 48 is 4 kV, as indicated by the voltage 80 appearing across the secondary switching element 62 following its turn-off;
- neither IGBT is subjected to a voltage 82,84 exceeding 2.5 kV, i.e. the primary capacitor 58 provides a voltage offset of -2 kV that protects the primary switching element 60 of the second switching block 56 from the full voltage of - 4 kV appearing across the first module 48.

Formation of the forced commutation circuit in each first module 48 limits the fault current 74 flowing through each first module 48 or blocks the fault current 74 from flowing through each first module 48, depending on the combined blocking voltage provided by each chain-link converter of the voltage source converter 30.

The inclusion of the secondary switching element 62 and primary control unit 68 in each first module 48 therefore enables each first module 48 to reliably limit or block a fault current 74. In contrast, omission of the secondary switching element 62 and primary control unit 68 from each first module 48 results in the problems mentioned above in relation to the conventional converter cell 10 shown in Figure 1 a.

The configuration of each first module 48 is advantageous in that the secondary switching element 62 of the first module 48 is much smaller than a circuit breaker and in that the first module 48 requires less switching elements than the conventional full-bridge converter cell 20 shown in Figure 1b to carry out its functions of selectively providing a voltage source and limiting or blocking a fault current 74, thus providing comparative reductions in terms of size, weight, cost and conduction losses. Moreover the configuration of the first module 48 is such that the secondary switching element 62 and primary control unit 58 can be added to the converter cell 10 of Figure 1 a to provide the converter cell 10 with a fault current limiting or blocking capability without the need for significant modification of the structure and switching control scheme of the converter cell 10.

The inclusion of the first modules 48 in the voltage source converter 30 therefore results in an economical, space-saving voltage source converter 30 that is capable of not only selectively facilitating voltage conversion during normal operation of the voltage source converter 30, but also limiting or blocking a fault current 74 in response to a fault in an associated electrical network 44,46.

The use of a pair of anti-parallel connected thyristors as the secondary switching element 62 not only provides the secondary switching element 62 with a higher voltage rating than the primary switching elements 60, thus improving the ability of the first module 48 to limit or block a fault current 74, but also reduces conduction losses in the secondary switching element 62 when it is turned on during normal operation of the first module 48.

The parallel connection of the snubber circuit and the secondary switching element 62 means that the secondary capacitor 64 is arranged to permit current to flow therethrough to store energy when the secondary switching element 62 is turned off to limit a current flowing through the first module 48 or block a current from flowing through the first module 48. The arrangement of the secondary capacitor 64 in this manner means that the secondary capacitor 64 can be energised by a current flowing from the AC electrical network 46 without having to turn on the secondary switching element 62. This is useful when the primary capacitor is initially uncharged at the start of a start-up sequence of the first module 48 and AC electrical network 46 in which a current from the AC electrical network 46 flows into the first module 48. Therefore, the secondary capacitor 64 can be used as a power supply unit to drive the secondary control unit 70 to enable turn-on of the secondary switching element 62. Without the secondary capacitor 64 in the first module 48, it would be necessary to add an additional power supply unit to the first module 48 or power the secondary control unit 70 from ground level, both of which could add considerable size, weight and cost to the first module 48.

Optionally the secondary control unit 70 may be configured to selectively turn on the secondary switching element 62 at a predefined time period following start-up of the AC electrical network 46 so as to limit an inrush current flowing from the AC electrical network 46 into the voltage source converter 30 to below a predefined current threshold. This protects the primary switching elements 60 and primary capacitor 58 from being damaged by a potentially high inrush current, thereby obviating the need for additional "soft start" equipment (e.g. a suitably rated resistor) and associated control hardware to limit the inrush current.

At least one first module 48 in the voltage source converter 30 of Figure 3 may be replaced by a second module 148 according to a second embodiment of the invention.

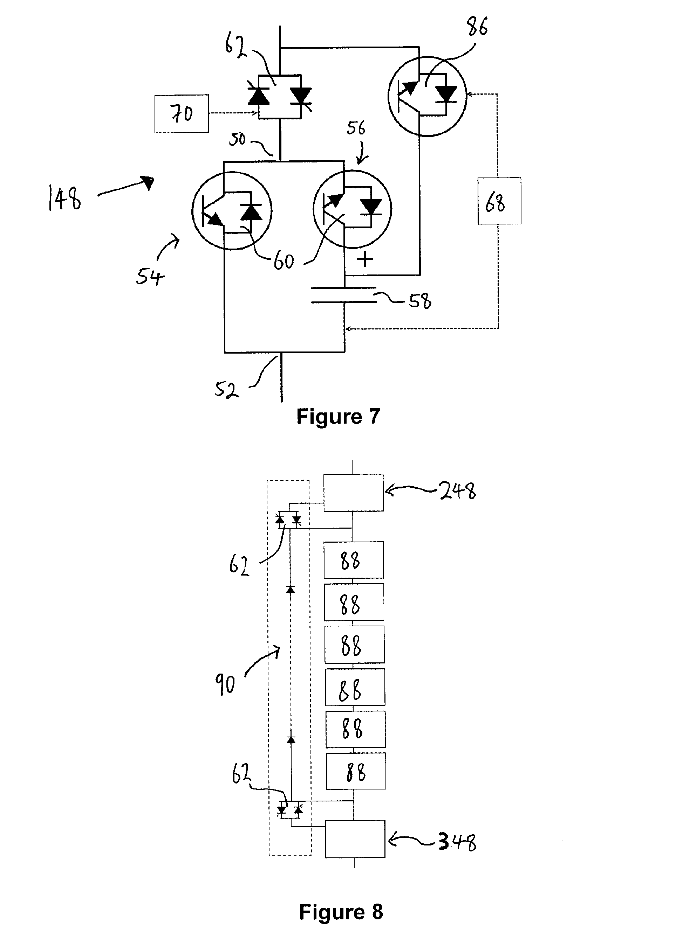

A second module 148 according to a second embodiment of the invention is shown in Figure 7. The second module 148 of Figure 7 is similar in structure and operation to the first module 48 of Figure 4, and like features share the same reference numerals.

The second module 148 differs from the first module 48 in that:
- the second module 148 includes first and second sets of current flow control elements connected in parallel with the second switching block 56 in a full-bridge arrangement;
- the first set of current flow control elements includes a series connection of the first switching block 54 and the primary capacitor 48;
- the secondary switching element 62 does not form part of the first switching block 54;
- the second set of current flow control elements includes a series connection of the secondary switching element 62 and a tertiary switching element 86;
- the primary control unit 68 is configured to control switching of the primary and tertiary switching elements 60,86.

The embodiment shown in Figure 6 omits the snubber circuit shown in Figure 4, but it will be appreciated that the snubber circuit shown in Figure 4 may be connected in parallel with the secondary switching element 62 of the second module 148.

The configuration of the second module 148 means that the first and second switching blocks 54,56 are connected in parallel with the primary capacitor 58 in a half-bridge arrangement to define a 2-quadrant unipolar module 148 that can provide, zero or positive voltage and can conduct current in two directions, and so each second module 148 is capable of selectively providing a voltage source.

As such the operation of the second module 148 to selectively provide a voltage source is similar to the operation of the first module 48 to selectively provide a voltage source. Therefore, in use, during normal operation of the AC and DC electrical networks 46,44, each of the first and second modules 148 of the first and second limb portions 38,40 are controllable to control the configuration of an AC voltage at each AC terminal 42 to facilitate voltage conversion between the AC and DC electrical networks 46,44, e.g. in the manner described above with reference to Figures 3 and 4. Meanwhile the secondary control unit 70 of each first module 48 turns on the secondary switching element 62 to permit current to flow freely through that first module 48, and the primary control unit 68 turns off the tertiary switching element 86 to block current from flowing therethrough.

In the event of the fault current 74 flowing from the AC electrical network 46 into the voltage source converter 30, the primary control unit 68 turns off the primary switching elements 60 of the first and second switching block 54,56 and turns on the tertiary switching element 86. Such switching of the primary switching elements 60 configures the primary and tertiary switching elements 60,86 and primary capacitor 58 to form a forced commutation circuit that applies a reverse biasing voltage across the secondary switching element 62 and first switching block 54 to reduce a current flowing through the secondary switching element 62 to zero, thereby enabling turn-off of the secondary switching element 62.

Following formation of the forced commutation circuit and turn-off of the secondary switching element 62, the flow of fault current 74 into the primary capacitor causes a reversal of a voltage across the primary capacitor 58. In response to the reversal of the voltage across the primary capacitor 58, the primary control unit 68 turns off the tertiary switching element 86. This allows the primary capacitor 58 to provide a voltage offset that protects the tertiary switching element 86 from the full voltage appearing across the second module 148.

The formation of a reverse voltage across the primary capacitor 58 in turn reduces a voltage stress across each of the first and second switching blocks 54,56. Preferably the primary capacitor 58 is rated such that the voltage formed across the primary capacitor 58 minimises a voltage stress across each of the first and second switching blocks 54,56.

The arrangement of the secondary switching element 62 in the second module 148 is such that the magnitude of the reverse voltage formed across the primary capacitor 58 is determined by the voltage rating of the secondary switching element 62. Thus, use of a secondary switching element 62 with a high voltage rating, especially one that exceeds the voltage rating of each primary switching element 60, further enhances the use of the voltage formed across the primary capacitor 58 to reduce the voltage stress across each of the first and second switching blocks 54,56.

The inclusion of the secondary and tertiary switching elements 62,86 and primary control unit 68 in each second module 148 therefore enables each second module 148 to reliably limit or block a fault current 74.

It is envisaged that, in other embodiments of the invention, each of the first and second modules shown in Figures 4 and 7 may be combined with at least one other type of module with zero or a lesser voltage blocking capability to form an electrical assembly that comprises a plurality of modules, whereby the or each other type of module includes at least one switching element and at least one energy storage device, the or each switching element and the or each energy storage device in the or each other type of module combining to selectively provide a voltage source.

The plurality of series-connected first modules 48 of each limb portion 38,40 in the voltage source converter 30 of Figure 3 may be replaced by an electrical assembly according to a third embodiment of the invention.

An electrical assembly according to a third embodiment of the invention is shown in Figure 8.

The electrical assembly includes a plurality of series-connected modules 88,248,348. More particularly, the plurality of series-connected modules includes first and second end modules 248,348 and a plurality of intermediate modules 88 connected in series between the first and second end modules 248,348.

Each of the first and second end modules 148 is identical in structure and operation to each first module 48 of Figure 4, and like features share the same reference numerals.

Each intermediate module 88 includes a pair of switching elements connected in parallel with a energy storage device (which is in the form of a capacitor) in a half-bridge arrangement to define a 2-quadrant unipolar module 88 that can provide, zero or positive voltage and can conduct current in two directions, and so each intermediate module 88 is capable of selectively providing a voltage source.

As such the operation of the intermediate and end modules 88,248,348 to selectively provide a voltage source is similar to the operation of the first module 48 to selectively provide a voltage source.

Therefore, in use, during normal operation of the AC and DC electrical networks 46,44, each of the intermediate and end modules 88,248,348 of the first and second limb portions 38,40 are controllable to control the configuration of an AC voltage at each AC terminal 42 to facilitate voltage conversion between the AC and DC electrical networks 46,44, e.g. in the manner described above with reference to Figures 3 and 4. Meanwhile the secondary control unit 70 of each end module 248,348 turns on the secondary switching element 62 to permit current to flow freely through that end module 248,348.

The electrical assembly further includes a current path 90 connected between the secondary switching elements 62 of the first and second end modules 248,348. The current path 90 is arranged to bypass the intermediate modules 88 connected in series between the first and second end modules 248,348. In the embodiment shown, the current path 90 includes a plurality of series-connected diodes.

It will be appreciated that, in place of the plurality of series-connected diodes, the current path may include a plurality of series-connected other switching elements, e.g. a plurality of series-connected other passive semiconductor devices, a plurality of series-connected active semiconductor devices (e.g. thyristors) and/or at least one active semiconductor device (e.g. thyristor) connected in series with at least one passive semiconductor device (e.g. diode).

The operation of each end module 248,348 to limit or block a fault current 74 is similar to the earlier-described operation of each first module to limit or block a fault current 741.

The provision of the current path 90 in the electrical assembly prevents the fault current 74 from flowing through the intermediate modules 88 connected in series between the first and second end modules 248,348, whilst permitting the first and second end modules 248,648 to limit or block the fault current 74. This obviates the need to provide each intermediate module 88 with a voltage blocking capability, thus simplifying the design and construction of the electrical assembly.

It will be appreciated that the topology of the voltage source converter is merely chosen to help illustrate the operation of the invention, and that the voltage source converter may be respectively replaced by another voltage source converter with a different topology.

Whilst the modules of Figures 4 and 7 and the electrical assembly of Figure 8 are primarily described with reference to their respective use in a voltage source converter, it will be appreciated that the modules of Figures 4 and 7 and the electrical assembly of Figure 8 may be applied to other types of electrical circuits.

## Claims

1. A module for connection to an electrical network, the module comprising:
a sub-module including first and second switching blocks connected in parallel with a primary energy storage device in a half-bridge arrangement, each switching block including a primary switching element;
a secondary switching element connected to or within the sub-module; and
a primary control unit configured to control switching of the primary switching elements so as to configure the primary switching elements and primary energy storage device to form a forced commutation circuit to turn off the secondary switching element and thereby limit a current flowing through the module or block a current from flowing through the module.

2. A module according to any preceding claim wherein the primary control unit is configured to control switching of the primary switching elements to enable formation of a voltage across the primary energy storage device following formation of the forced commutation circuit and turn-off of the secondary switching element, so as to reduce a voltage stress across each of the first and second switching blocks.

3. A module according to Claim 2 wherein the secondary switching element is arranged in the module such that the magnitude of the voltage formed across the primary energy storage device is determined by the voltage rating of the secondary switching element.

4. A module according to any preceding claim wherein the secondary switching element is or includes an electronic switching element...

5. A module according to any preceding claim wherein the secondary switching element is or includes a bidirectional switching element that can conduct current in two directions.

6. A module according to any preceding claim wherein each switching block includes a primary switching element connected in anti-parallel with a passive current check element.

7. A module according to any preceding claim wherein the first and second switching blocks are connected in parallel with the primary energy storage device in a half-bridge arrangement to define a 2-quadrant unipolar sub-module that can provide zero or positive voltage and can conduct current in two directions.

8. A module according to any preceding claim wherein the sub-module includes first and second sub-module terminals, the first switching block is connected in parallel with a series connection of the second switching block and primary energy storage device between the first and second sub-module terminals, and the first switching block includes the secondary switching element connected in series with its primary switching element.

9. A module according to Claim 8 wherein the primary control unit is configured to turn off the primary switching element of the second switching block in response to a reversal of a voltage across the primary energy storage device following formation of the forced commutation circuit and turn-off of the secondary switching element.

10. A module according to any of Claims 1 to 7 wherein the module includes first and second sets of current flow control elements connected in parallel with the second switching block in a full-bridge arrangement, the first set of current flow control elements includes a series connection of the first switching block and the primary energy storage device, the second set of current flow control elements includes a series connection of the secondary switching element and a tertiary switching element, and the primary control unit is configured to control switching of the primary and tertiary switching elements so as to configure the primary and tertiary switching elements and primary energy storage device to form a forced commutation circuit to turn off the secondary switching element and thereby limit a current flowing through the module or block a current from flowing through the module.

11. A module according to Claim 10 wherein the primary control unit is configured to turn off the tertiary switching element in response to a reversal of a voltage across the primary energy storage device following formation of the forced commutation circuit and turn-off of the secondary switching element.

12. A module according to any preceding claim wherein the first switching block includes a primary switching element connected in anti-parallel with a passive current check element, and the passive current check element of the first switching block is configured to limit a magnitude and/or duration of a recovery current in the secondary switching element following turn-off of the secondary switching element.

13. A module according to any preceding claim further including:
a secondary control unit configured to selectively turn on the secondary switching element; and
a secondary energy storage device configured to selectively provide a driving voltage to drive the secondary control unit, the secondary energy storage device being arranged to permit current to flow therethrough to store energy when the secondary switching element is turned off to limit a current flowing through the module or block a current from flowing through the module.

14. A module according to Claim 13 including a snubber circuit connected in parallel with the secondary switching element, wherein the snubber circuit includes the secondary energy storage device.

15. A module according to any preceding claim further including a secondary control unit configured to selectively turn on the secondary switching element at a predefined time period following start-up of the electrical network so as to limit an inrush current flowing from the electrical network into the module to below a predefined current threshold.

16. An electrical assembly comprising a plurality of modules, each module including at least one switching element and at least one energy storage device, the or each switching element and the or each energy storage device in each module combining to selectively provide a voltage source, wherein at least one module is in accordance with any of Claims 1 to 15.

17. An electrical assembly according to Claim 16 including a plurality of series-connected modules, wherein the plurality of series-connected modules includes first and second end modules, each of the first and second end modules is in accordance with any of Claims 1 to 15, at least one other module is connected between the first and second end modules, and the electrical assembly further includes a current path connected between the secondary switching elements of the first and second end modules, the current path being arranged to bypass the or each other module connected between the first and second end modules, the current path including at least one switching element.
